# EUROPEAN PATENT SPECIFICATION

(11) **EP 3 064 375 B1**
(45) Date of publication and mention of the grant of the patent: **08.08.2018**
(21) Application number: 14857913.9
(22) Date of filing: 02.06.2014
(51) Int. Cl.: B60C 9/18, B60C 9/22, B60C 17/00, B60C 9/08, B60C 9/00, B60C 9/20, B60C 15/00

(54) **RUN-FLAT RADIAL TIRE**
NOTLAUFRADIALREIFEN
PNEU RADIAL À AFFAISSEMENT LIMITÉ

(30) Priority: 28.10.2013 JP 2013223383
(43) Date of publication of application: 07.09.2016
(73) Proprietor: Bridgestone Corporation, Tokyo 104-8340 (JP)
(72) Inventor: OGAWA, Gaku, Tokyo 104-8340 (JP)
(74) Representative: Oxley, Robin John George
(86) International application number: PCT/JP2014/064654
(87) International publication number: WO 2015/064137

(56) References cited:
- EP-A1- 0 507 184
- EP-A1- 2 236 318
- WO-A1-2013/024516
- JP-A- 2001 180 225
- JP-A- 2004 322 718
- JP-A- 2005 219 512
- JP-A- 2006 315 580
- JP-A- 2011 063 071
- US-A- 5 529 105

## Description

### Technical Field

The present invention relates to a run-flat radial tire.

### Background Art

As a run-flat tire capable of running a specific distance even in a state in which the tire has been punctured and the internal pressure has dropped, Japanese Patent Application Laid-Open (JP-A) No. 2012-116212 describes a side reinforcement type of run-flat radial tire in which tire side portions are reinforced with side reinforcement rubber. Attention is also drawn to the disclosure of US5529105 showing the features of the preamble of claim 1. Attention is also drawn to the disclosure of a pneumetic safety tire according to EP 0 507 184 A1.

### SUMMARY OF INVENTION

### Technical Problem

However, in a side reinforcement type of run-flat radial tire, in cases in which a slip angle (SA) is input such as by vehicle turning during running in a state of reduced internal pressure (during run-flat running), a buckling phenomenon sometimes occurs in which a tire side portion bends by folding in toward the tire inside.

In consideration of the above circumstances, an object of the present invention is to provide a run-flat radial tire capable of suppressing a buckling phenomenon from occurring in a tire side portion during run-flat running.

### Solution to Problem

A run-flat radial tire according to a first aspect of the present invention is as claimed in claim 1.

### Advantageous Effects of Invention

Due to adopting the above configuration, the present invention enables a buckling phenomenon to be suppressed from occurring in a tire side portion during run-flat running.

### BRIEF DESCRIPTION OF DRAWINGS

Fig. 1 is a half cross-section illustrating one side of a cross-section of a run-flat radial tire according to a first exemplary embodiment of the present invention, sectioned along a tire axial direction.
Fig. 2 is a cross-section illustrating a state during run-flat running of a run-flat radial tire according to the first exemplary embodiment of the present invention, sectioned along the tire axial direction.
Fig. 3 is a side view of a run-flat radial tire of a Comparative Example during run-flat running, as viewed along the tire axial direction.
Fig. 4 is a half cross-section illustrating one side of a cross-section of a run-flat radial tire according to a second exemplary embodiment of the present invention, sectioned along a tire axial direction.
Fig. 5 is a graph illustrating a relationship between a rim detachment index at a vehicle turn inside, and a rim detachment index at a vehicle turn outside.

### DESCRIPTION OF EMBODIMENTS

### First Exemplary Embodiment

### Run-Flat Radial Tire 10 Configuration

Explanation follows regarding a run-flat radial tire 10 (hereinafter referred to as "tire 10") according to a first exemplary embodiment of the present invention, with reference to the drawings. In the drawings, the arrow TW indicates a width direction of the tire 10 (a tire width direction), and the arrow TR indicates a radial direction of the tire 10 (a tire radial direction). The tire width direction referred to here means a direction parallel to the rotation axis of the tire 10, and is also referred to as the tire axial direction. The tire radial direction is a direction orthogonal to the rotation axis of the tire 10. The label CL indicates an equatorial plane of the tire 10 (a tire equatorial plane). Moreover, in the present exemplary embodiment, the rotation axis side of the tire 10 along the tire radial direction is referred to as the "tire radial direction inside", and the opposite side to the rotation axis of the tire 10 along the tire radial direction is referred to as the "tire radial direction outside". The equatorial plane CL side of the tire 10 along the tire width direction is referred to as the "tire width direction inside", and the opposite side to the equatorial plane CL of the tire 10 along the tire width direction is referred to as the "tire width direction outside".

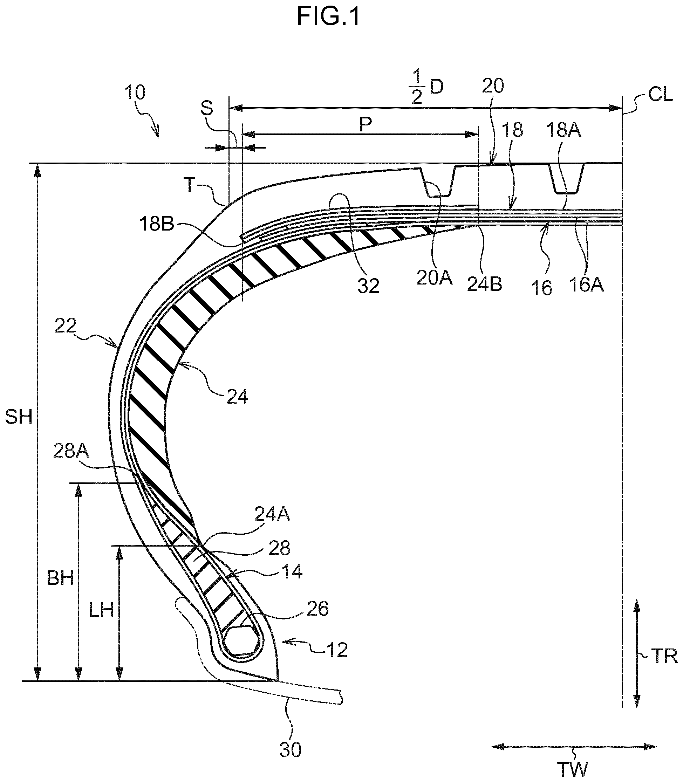

Fig. 1 illustrates the tire 10 mounted to a standard rim 30 (illustrated by the double-dash intermittent lines in Fig. 1) when inflated to a standard air pressure. The standard rim referred to here is a rim specified in the 2013 edition of the Year Book of the Japan Automobile Tire Manufactures Association (JATMA). The above standard air pressure is the air pressure corresponding to the maximum load capacity in the 2013 edition of the Year Book of the Japan Automobile Tire Manufactures Association (JATMA).

Note that in the following explanation, loading is to the maximum load (maximum load capacity) for a single wheel of the appropriate size as listed in the following Standards. The internal pressure is the air pressure corresponding the maximum load (maximum load capacity) for a single wheel listed in the following Standards. Moreover, the rim is a standard rim (or "Approved Rim", "Recommended Rim") of the appropriate size as listed in the following Standards. The Standard is determined according to current Industrial Standards prevailing in the region of tire manufacture or use. For example, as stipulated in "The Year Book of the Tire and Rim Association Inc." in the United States of America, in the "Standards Manual of the European Tire and Rim Technical Organization" in Europe, and in the "JATMA Year Book" of the Japan Automobile Tire Manufactures Association in Japan.

As illustrated in Fig. 1, the tire 10 according to the present exemplary embodiment principally includes a pair of bead portions 12, a carcass 14 having a toroidal shape and spanning between the pair of bead portions 12, an inclined belt layer 16 that is provided further to the tire radial direction outside than the carcass 14, a belt reinforcement layer 18 that is provided further to the tire radial direction outside than the inclined belt layer 16, a reinforcement cord layer 32 that is provided further to the tire radial direction outside than the belt reinforcement layer 18, a tread portion 20 provided further to the tire radial direction outside than the reinforcement cord layer 32, tire side portions 22 that respectively couple the bead portions 12 and the tread portion 20 together, and side reinforcement rubber 24 serving as a side reinforcement layer provided to the tire side portions 22. In a state in which the tire 10 is fitted to the standard rim 30 with an internal pressure of the standard air pressure, the length of 1/2 the difference between the tire outside diameter and the rim diameter is taken as a section height SH (tire cross-section height). The tire 10 in Fig. 1 has the section height SH set at 115 mm, or greater, and, as an example in the present exemplary embodiment, the section height SH is set to 129 mm. Note that there is no limitation thereto, and the tire may be one in which the section height SH is less than 115 mm. There is no particular upper limit to the section height SH, and it is, for example, 155 mm or less.

The bead portions 12 are provided as a left and right pair, spaced apart from each other at a spacing in the tire width direction (Fig. 1 illustrates the bead portion 12 on one side alone). Bead cores 26 are respectively embedded in the pair of bead portions 12, and the carcass 14 spans between the bead cores 26.

The carcass 14 is configured including a single or plural carcass plies. The carcass plies are formed by covering plural strands of cord (for example, organic fiber cord or metal cord) with a covering rubber. The carcass 14 formed in this manner configures a tire frame extending in a toroidal shape from one of the bead cores 26 to the other of the bead cores 26. One end and the other end of the carcass 14 each fold back around the respective bead core 26, from the tire inside to the tire outside, so as to extend as far as the tread portion 20, described later. In the present exemplary embodiment, the one end and the other end of the carcass 14 each fold back around the respective bead core 26 and anchored; however, there is no limitation thereto. For example, a configuration may be adopted in which plural bead core pieces are disposed in the bead portions 12, and the carcass 14 is tucked between the plural bead core pieces.

A bead filler 28 extending from the respective bead core 26 toward the tire radial direction outside is embedded in respective regions of the bead portions 12 sandwiched between the carcass 14. An end portion 28A of the bead filler 28 on the tire radial direction outside enters into the tire side portion 22, and a thickness of the bead filler 28 decreases toward the tire radial direction outside.

In a state in which the tire 10 is fitted to the standard rim 30 at an internal pressure of the standard air pressure, a height BH from the respective end portion 28A at the tire radial direction outside of the bead filler 28 to the leading end of the bead portion 12 is set within a range of from 30% to 50% of the section height SH. In cases in which the height BH of the bead filler 28 is less than 30% of the section height SH, there is the possibility of not being able to secure sufficient durability during run-flat running. Moreover, in cases in which the height BH of the bead filler 28 is greater than 50% of the section height SH, there is the possibility of a deterioration in ride comfort. Thus due to the above, BH is preferably set within a range of from 30% to 50% of the section height SH.

The inclined belt layer 16 is laid up at the tire radial direction outside of the carcass 14. The inclined belt layer 16 is configured from a single or plural belt plies 16A. As an example in the present exemplary embodiment, the inclined belt layer 16 is configured by two belt plies 16A. The belt plies 16A are formed by covering plural strands of cord (for example, organic fiber cord or metal cord) with a coating rubber. The cords configuring the belt plies 16A are laid up inclined to the tire circumferential direction, with an angle inclination of from 15 degrees to 30 degrees. As an example in the present exemplary embodiment, layup is made with an angle of inclination of 26 degrees. The inclined belt layer 16 is formed so as to span from one end portion to the other end portion of the tread portion 20 in the tire width direction.

The belt reinforcement layer 18 is provided at the tire radial direction outside of the inclined belt layer 16. The belt reinforcement layer 18 is configured by a cord layer 18A.

The cord layer 18A configuring the belt reinforcement layer 18 is formed by covering plural strands of cord (for example, organic fiber cord or metal cord) with a coating rubber. The cord configuring the cord layer 18A is laid up along the tire circumferential direction. The belt reinforcement layer 18 is formed spanning from one end portion to another end portion of the tread portion 20 in the tire width direction, and covers and reinforces the inclined belt layer 16.

The reinforcement cord layer 32 is laid up at the tire radial direction outside of the belt reinforcement layer 18. As an example in the present exemplary embodiment, the reinforcement cord layer 32 is formed at both end portions of the tread portion 20 (Fig. 1 illustrates only the reinforcement cord layer 32 on one side). There is, however, no limitation thereto, and the reinforcement cord layer 32 may be formed so as to span from one end portion to the other end portion of the tread portion 20 in the tire width direction. Moreover, the reinforcement cord layer 32 may be formed so as to span from one end portion to the other end portion of the tread portion 20 in the tire width direction, and another separate reinforcement cord layer 32 may be formed at a shoulder portion alone.

The reinforcement cord layer 32 is formed such that the plural strands of cord are inclined to the tire circumferential direction at an angle of inclination of from 60 degrees to 90 degrees. As an example in the present exemplary embodiment, lay up is performed so as to be inclined with an angle of inclination of 90 degrees. Organic fiber cord or metal cord may be employed as the cord for forming the reinforcement cord layer 32. PET is employed as an example in the present exemplary embodiment.

The tread portion 20 is provided at the tire radial direction outside of the inclined belt layer 16, and the reinforcement cord layer 32. The tread portion 20 is a location that makes contact with the road surface when running, and circumferential direction grooves 20A extending along the tire circumferential direction are formed in the surface of the tread portion 20. Width direction grooves, not illustrated in the drawings, are also formed in the tread portion 20 extending along the tire width direction. The shape and number of the circumferential direction grooves 20A may be appropriately set according to the performance required of the tire 10, such as water dispelling performance and steering stability performance. The shape and number of the width direction grooves may also, similarly, be appropriately set according to the performance required of the tire 10, such as water dispelling performance and steering stability performance.

The tire side portions 22 are each provided between the respective bead portions 12 and the tread portion 20. The tire side portions 22 extend in the tire radial direction and couple the bead portions 12 and the tread portion 20 together, and are configured so as to be able to bear load acting on the tire 10 during run-flat running.

In each of the tire side portions 22, the side reinforcement rubber 24 for reinforcing the tire side portion 22 is laid up at the tire width direction inside of the carcass 14. The side reinforcement rubber 24 is reinforcement rubber to enable running for a specific distance in a state in which the weight of the vehicle and the occupants is supported when the internal pressure of the tire 10 has decreased, such as due to puncturing. As an example in the present exemplary embodiment, the side reinforcement rubber 24 having a main component of rubber is laid up; however, there is no limitation thereto, and the side reinforcement rubber 24 may be formed of another material and, for example, the side reinforcement rubber 24 may be formed with a thermoplastic resin or the like as a main component.

Note that although in the present exemplary embodiment, the side reinforcement rubber 24 is formed from a single type of rubber material, there is no limitation thereto, and the side reinforcement rubber 24 may be formed from plural types of rubber material. Moreover, as long as the side reinforcement rubber 24 has a rubber material as a main component, other materials may be included, such as filler, short fibers, or resin. Moreover, in order to raise the durability during run-flat running, a rubber material having a JIS hardness of from 70 to 85, as measured at 20°C using a durometer hardness tester, may be included as the rubber material configuring the side reinforcement rubber 24. Moreover, a rubber material may be included having a physical property of a loss coefficient tan 8 of 0.10 or lower, as measured using a viscosity spectrometer (for example a spectrometer manufactured by Toyo Seiki Seisaku-sho, Ltd.) under conditions of frequency 20 Hz, initial strain 10%, dynamic strain ± 2%, and temperature 60°C.

Each of the side reinforcement rubbers 24 extends in the tire radial direction along the inner face of the carcass 14, is shaped with a thickness that decreases toward the bead core 26 side and toward the tread portion 20 side and is, for example, formed in a substantially crescent moon shape. The thickness referred to here means a length measured along a normal line to the carcass 14, in a state in which the tire 10 has been fitted to the standard rim 30 and has an internal pressure of the standard air pressure. The side reinforcement rubbers 24 may be joined together at the tire equatorial plane.

An inner liner, not illustrated in the drawings, is laid up at the internal face of the side reinforcement rubber 24, so as to span from one of the bead portions 12 to the other of the bead portions 12. As an example in the present exemplary embodiment, an inner liner having a main component of a butyl rubber is laid up; however, there is no limitation thereto, and an inner liner having a main component of another rubber material or a resin may be laid up. Note that although in the present exemplary embodiment, a single layer of the side reinforcement rubber 24 is sandwiched between the inner liner and the carcass 14, there is no limitation thereto. For example, a configuration may be such that a separate carcass is laid up between the inner liner and the carcass 14, and the separate carcass segments the side reinforcement rubber 24.

Moreover, in each of the side reinforcement rubbers 24, a lower end portion 24A on the bead core 26 side of the side reinforcement rubber 24 overlaps with the bead filler 28 present on the other side of the carcass 14, and an upper end portion 24B on the tread portion 20 side of the side reinforcement rubber 24 overlaps with the inclined belt layer 16 present on the other side of the carcass 14. When the side reinforcement rubber 24 is projected along the tire radial direction, the side reinforcement rubber 24 and the reinforcement cord layer 32 overlap with each other. The reinforcement cord layer 32 is laid up so as to cover a region from the upper end portion 24B of the side reinforcement rubber 24 to an end portion 18B at the tire width direction outside of the belt reinforcement layer 18.

Moreover, in a state in which the tire 10 is fitted to the standard rim 30 with an internal pressure of the standard air pressure, a height LH from the respective lower end portion 24A of the side reinforcement rubber 24 to a leading end of the respective bead portion 12 is preferably set in a range of from 50% to 80% of a height BH of the bead filler 28. As an example in the present exemplary embodiment, the height LH is set to 65% of the height BH. This is because it becomes difficult to secure durability during run-flat running if the height LH is higher than 80% of the height BH, and because there is a deterioration in ride comfort if the height LH is less than 50% thereof.

Taking the distance in the tire width direction between ground contact ends T of the tread portion 20 under maximum load capacity in a state in which the tire 10 is fitted to the standard rim 30 with an internal pressure of the standard air pressure as a tread width D, in the present exemplary embodiment, the length of the inclined belt layer 16 along the tire width direction is set in a range of from 90% to 115% of the tread width D. If the length of the inclined belt layer 16 along the tire width direction is formed shorter than 90% of the tread width D, then it becomes difficult to secure the rigidity of the tread portion 20. Moreover, if the length of the inclined belt layer 16 along the tire width direction is longer than 115% of the tread width D, then ride comfort deteriorates. The length of the belt layer 16 along the tire width direction is accordingly preferably set in a range of from 90% to 115% of the tread width D. Maximum load capacity here refers to the maximum load capacity as specified in the 2013 edition of the YEAR BOOK of the Japan Automobile Tire Manufacturers Association (JATMA).

There is no rim guard (rim protector) provided due to the present exemplary embodiment being applied to a tire 10 having a high section height SH; however, a rim guard may be provided.

### Operation and Advantageous Effects

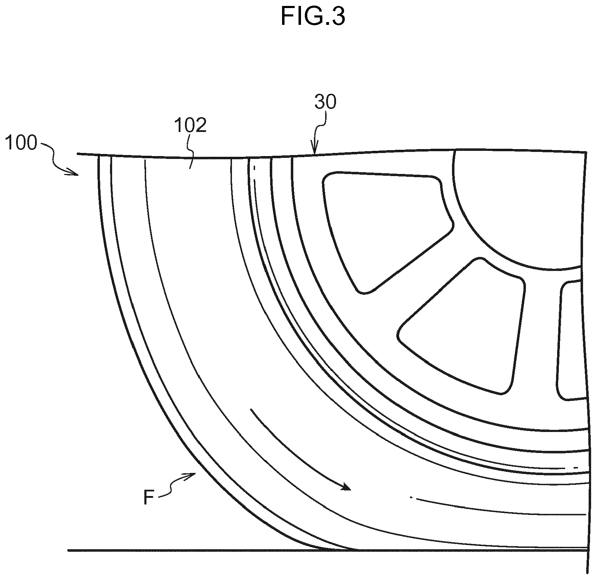

Next, explanation follows regarding operation of the tire 10 of the present exemplary embodiment, through explaining a buckling phenomenon that occurs at the tire side portion on a vehicle turn inside. In the following explanation, a tire 100 illustrated in Fig. 3, is a tire 100 of a Comparative Example not including the reinforcement cord layer 32 according to the present exemplary embodiment, and that has been mounted to the standard rim 30.

As illustrated in Fig. 3, a ground contact portion of the tire 100 is in a greatly distorted state during run-flat running. When a slip angle (SA) is input in this state, for example by cornering, the ground contact portion of the tire 100 is squashed, the distortion of the tire 100 increases, and the belt diameter of a tread-in side portion F increases due to this distortion propagating toward the progression direction front side of the tire 100 (note that the arrow in Fig. 3 indicates the tire rotation direction). As a result, tensile force on the bead portions toward the tire radial direction outside becomes larger, and, together with a buckling phenomenon, in which the tire side portion 102 at the vehicle turn inside bends by folding in toward the inside of the tire 100, sometimes a phenomenon (rim detachment) occurs in which the bead portion detaches from the standard rim 30.

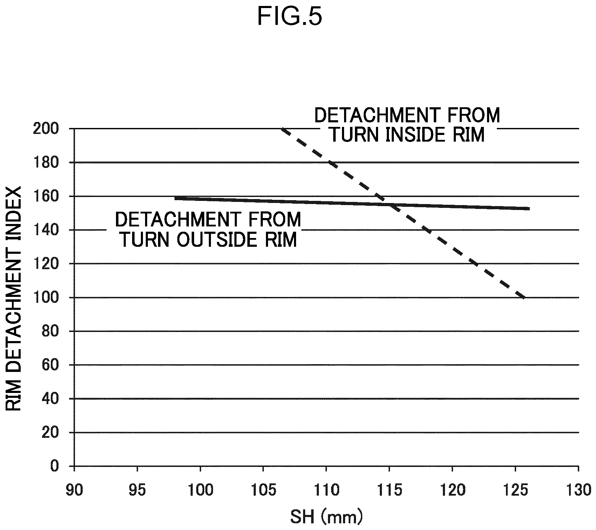

As illustrated in Fig. 5, it has been confirmed that rim detachment at the turn inside is liable to occur for a tire having a section height SH of 115 mm, or greater. The graph illustrated in Fig. 5 is from an investigation into a rim detachment index against section height SH when employing a run-flat radial tire of size 215/60R17. The higher the numerical value in the rim detachment index, the less liable rim detachment is to occur. According to Fig. 5, rim detachment is more liable to occur at the turn outside of a tire for tires having a section height SH of less than 115 mm, and rim detachment is more liable to occur at the turn inside of a tire for tires having a section height SH of 115 mm, or greater. It is apparent from this result that it is important to suppress rim detachment at the turn inside for tires having a section height SH of 115 mm, or greater.

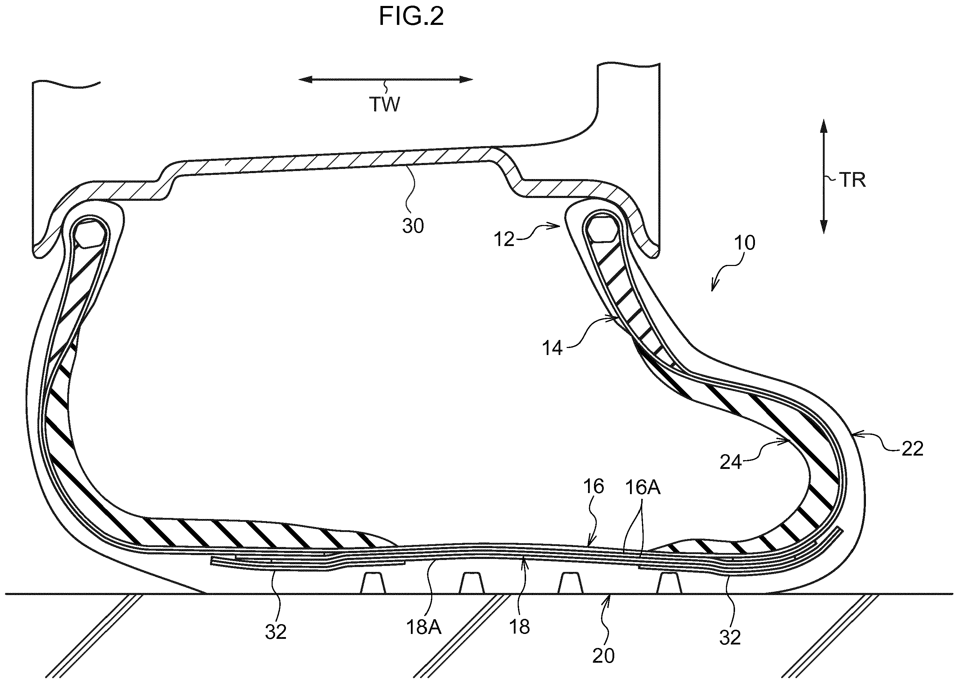

As illustrated in Fig. 1, in the tire 10 according to the present exemplary embodiment, the reinforcement cord layer 32 is laid up at both end portions of the tread portion 20, and so, compared to cases not laid up with the reinforcement cord layer 32, the rigidity is thereby raised for both end portions of the tread portion 20, which act as the origin for a buckling phenomenon, and bending of the shoulder portion becomes less liable to occur. Thus even in cases in which a slip angle (SA) is input to the tire 10 during run-flat running, as illustrated in Fig. 2, the tire side portion 22 does not fold by bending in toward the inside of the tire 10, enabling a buckling phenomenon to be suppressed from occurring. Note that plural layers of the reinforcement cord layer 32 may be formed. Such cases enable the rim detachment suppression effect to be raised even further.

Moreover, the reinforcement cord layer 32 is formed by cord inclined to the tire circumferential direction. The reinforcement cord layer 32 thereby raises the bending rigidity of shoulder portions, even in cases in which a slip angle (SA) is input to the tire 10 during run-flat running, making a buckling phenomenon less liable to occur. This thereby enables the bead portion 12 to be suppressed from being pulled to the tire radial direction outside. In particular, setting the reinforcement cord layer 32 at an angle of inclination to the tire circumferential direction of 90 degrees enables the rigidity to bending deformation of the tire side portion 22 to be raised compared to cases in which the angle of inclination is less than 90 degrees.

Moreover, due to the lower end portion 24A of the side reinforcement rubber 24 overlapping with the bead filler 28, the rigidity of the tire side portion 22 is increased, enabling the durability to be improved during run-flat running. Moreover, the end portion 28A of the bead filler 28 is provided further to the tire radial direction inside than the maximum width position of the tire 10, and so the rigidity of the tire side portion 22 does not become too high.

As described above, providing the reinforcement cord layer 32 according to the present exemplary embodiment enables a buckling phenomenon to be effectively suppressed from occurring, even in a tire 10 having a section height SH of 115 mm, or greater.

Note that in the present exemplary embodiment, the reinforcement cord layer 32 is provided at both end portions of the tread portion 20; however, there is no limitation thereto, and, for example, the reinforcement cord layer 32 may be provided only to the one end portion of the tread portion 20 that is positioned at the inside in the tire mounting direction. Even in such a case, a buckling phenomenon can be suppressed from occurring. Namely, rim detachment is more liable to occur at the tire mounting direction inside when the tire 10 that punctured is on the turn outside, and adopting the countermeasures described above enables rim detachment to be suppressed from occurring.

### Second Exemplary Embodiment

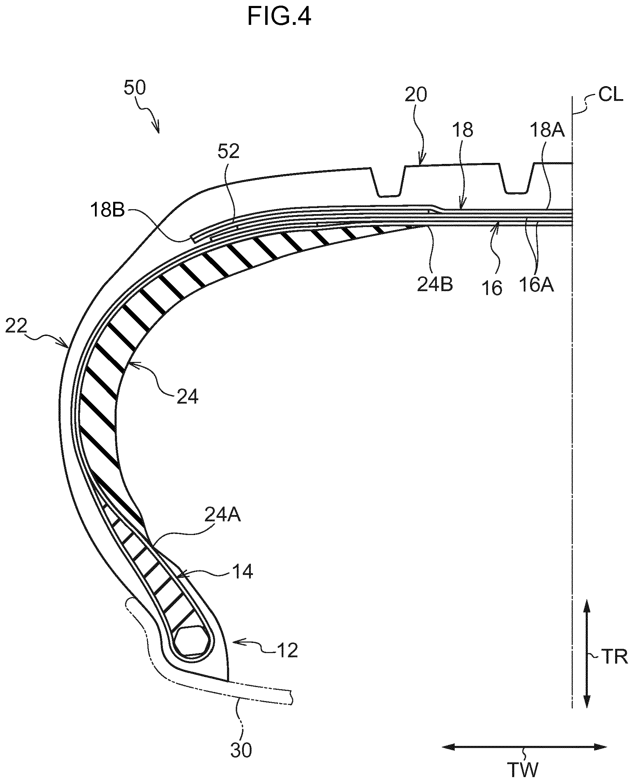

Next, explanation follows regarding a run-flat radial tire 50 (hereinafter referred to as "tire 50") according to a second exemplary embodiment of the present invention. Note that configuration similar to that of the first exemplary embodiment is allocated the same reference numerals, and explanation thereof is omitted. As illustrated in Fig. 4, the tire 50 of the present exemplary embodiment is configured similarly to the tire 10 of the first exemplary embodiment, except for differing in the position where a reinforcement cord layer 52 is laid up.

The reinforcement cord layer 52 is laid up between an inclined belt layer 16 and a belt reinforcement layer 18 at both end portions of a tread portion 20, and is formed from cord inclined to the tire circumferential direction. Organic fiber cord or metal cord may be employed as the cord for forming the reinforcement cord layer 52. PET is employed as an example in the present exemplary embodiment.

The end portion at the tire width direction inside of the reinforcement cord layer 52 extends as far as the vicinity of an upper end portion 24B of a side reinforcement rubber 24. The end portion at the tire width direction outside of the reinforcement cord layer 52 extends as far as an end portion on the tire width direction outside of the belt reinforcement layer 18. There is, however, no limitation thereto, and the length of the reinforcement cord layer 52 in the tire width direction may be freely set. The tire 50 of the present exemplary embodiment is able to obtain similar advantageous effects to those of the first exemplary embodiment.

Moreover, a separate reinforcement cord layer may be provided at the tire radial direction outside of the belt reinforcement layer 18, in a configuration in which the belt reinforcement layer 18 is sandwiched between reinforcement cord layers. The rigidity at the vicinity of end portions of the tread can be further raised in such cases. Moreover, in cases in which there are plural belt reinforcement layers 18, the reinforcement cord layer 52 may be provided between the belt reinforcement layers 18.

### Test Examples

In order to confirm the advantageous effects of the run-flat radial tire according to the present invention, run-flat radial tires of the following Examples 1 to 9, and a run-flat radial tire of a Comparative Example that does not fall within the present invention, were prepared and the following tests were performed.

Explanation follows regarding the run-flat radial tires of Examples 1 to 9 employed in the tests, and regarding the run-flat radial tire of the Comparative Example employed in the tests. The size of all of the run-flat radial tires employed in the tests was 215/60R17, and the substance of the reinforcement cord layer was steel. A similar structure to that of the tire 10 of the present exemplary embodiment was employed for the run-flat radial tires of Examples 1 to 9, with the tires having different respective parameters for the reinforcement cord layer.

Note that the run-flat radial tire of the Comparative Example is a run-flat radial tire not equipped with a reinforcement cord layer. The respective various numerical values of the run-flat radial tires of Examples 1 to 9 and the Comparative Example are as listed in Tables 1 to 3. In the following Tables 1 to 3, "lay-up location (tire width direction)" indicates either a configuration in which the reinforcement cord layer is laid up at both end portions (shoulder portions) of the tread portion alone, or a configuration in which the reinforcement cord layer is laid up so as to span across the tread portion entirely. Moreover, "lay-up location (tire radial direction)" indicates either a configuration in which the reinforcement cord layer is laid up at the tire radial direction inside of the belt reinforcement layer, or a configuration in which the reinforcement cord layer is laid up at the tire radial direction outside of the belt reinforcement layer. Moreover, "position S from ground contact end T" indicates a length in the tire width direction from a ground contact end T to an end portion of the reinforcement cord layer on the tire width direction outside, with this indicate by a negative value when the end portion of the reinforcement cord layer is positioned further to the tire width direction outside than the ground contact end T, and with this indicate by a positive value when the end portion of the reinforcement cord layer is positioned further to the tire width direction inside than the ground contact end T (see Fig. 1). Namely, looking at Table 1, the reinforcement cord layer of Example 1 was laid up at the tire radial direction inside of the belt reinforcement layer, and formed with the end portion of the reinforcement cord layer at the tire width direction outside positioned 5 mm further to the tire width direction outside than the ground contact end T, with a length of a further 45 mm to the tire width direction inside therefrom.

In the tests, first the test tires were fitted to a standard rim as specified by JATMA, mounted to a vehicle without inflating with air (at an internal pressure of 0 kPa), and run-in for a distance of 5 km at a speed of 20 km/h. Then test tires were introduced at a specific speed to a curving road having a radius of curvature of 25 m, and stopped at a position of 1/3 of a lap of the curving road, with this repeated twice in succession (a J-turn test). The turning acceleration was then raised and retesting performed in cases in which the bead portions did not detach from the rim.

The turning acceleration when a bead portion of Comparative Example detached from a rim was taken as a reference value (100), and the turning acceleration when each of the bead portions of Examples 1 to 9 detached from a rim were expressed as an index, and evaluated. The "rim detachment index" in Table 1 expresses, as an index, the turning acceleration when rim detachment occurred for each bead portion. In relation to the numerical values of the rim detachment index, the larger the value the better the result indicated.

Next, the weight of each of the test tires was measured, and, taking the weight of the Comparative Example as the reference value (100), the weight for each of the tires from Examples 1 to 9 was expressed as an index and evaluated. In the weight index, the smaller the value the lower the weight, indicating better results. The results of the Comparative Example and Example 1 to Example 3 are shown in Table 1 below, the results of Example 4 to Example 7 are shown in Table 2 below, and the results of Examples 8 and 9 are shown in Table 3 below.

**Table 1**

| | | Comparative Example | Example 1 | Example 2 | Example 3 |
|---|---|---|---|---|---|
| Reinforcement Cord Layer | Lay-Up Location (Tire Width Direction) | None | Shoulder Portions | Shoulder Portions | Entire Tread Portion |
| | Lay-Up Location (Tire Radial Direction) | - | Inside Belt Reinforcement Layer | Outside Belt Reinforcement Layer | Outside Belt Reinforcement Layer |
| | Length In Tire Width Direction (mm) | - | 45 | 45 | 180 |
| | Position S From Ground Contact End T (mm) | - | -5 | -5 | -5 |
| | Overlap Width P With Side Reinforcement Rubber (mm) | - | 19 | 19 | 19 |
| | Angle Of Inclination To Tire Circumferential Direction (Degrees) | - | 90 | 90 | 90 |
| | P/ Tread Width D (%) | - | 11.0 | 11.0 | 11.0 |
| | P/ Section Height SH (%) | - | 15.0 | 15.0 | 15.0 |
| Results | Rim Detachment Index | 100 | 103 | 106 | 107 |
| | Weight Index | 100 | 102 | 102 | 107 |

As illustrated in Table 1, it was confirmed that the run-flat tires of Examples 1 to 3 laid up with the reinforcement cord layer had better results of the rim detachment index than the run-flat tire of the Comparative Example lacking the reinforcement cord layer. Moreover, when Example 1 and Example 2 are compared, it was confirmed that the rim detachment index for the configuration having the reinforcement cord layer laid up at the outside of the belt reinforcement layer (see Fig. 1) was better than that of the configuration having the reinforcement cord layer laid up at the inside of the belt reinforcement layer (see Fig. 4).

Moreover, Example 3 is configured with the reinforcement cord layer laid up over the entire tread portion, and although the rim detachment index was raised more than in the other Examples, the weight index was also larger. Note that results are also similar in cases in which an organic fiber cord was employed in the reinforcement cord layer.

**Table 2**

| | | Example 4 | Example 5 | Example 6 | Example 7 |
|---|---|---|---|---|---|
| Reinforcement Cord Layer | Lay-Up Location (Tire Width Direction) | Shoulder Portions | Shoulder Portions | Shoulder Portions | Shoulder Portions |
| | Lay-Up Location (Tire Radial Direction) | Outside Belt Reinforcement Layer | Outside Belt Reinforceme nt Layer | Outside Belt Reinforcement Layer | Outside Belt Reinforcement Layer |
| | Length In Tire Width Direction (mm) | 45 | 45 | 45 | 45 |
| | Position S From Ground Contact End T (mm) | -5 | -5 | -5 | -5 |
| | Overlap Width P With Side Reinforcement Rubber (mm) | 19 | 19 | 19 | 19 |
| | Angle Of Inclination To Tire Circumferential Direction (Degrees) | 50 | 60 | 70 | 80 |
| | P/Tread Width D (%) | 11.0 | 11.0 | 11.0 | 11.0 |
| | P/ Section Height SH (%) | 15.0 | 15.0 | 15.0 | 15.0 |
| Results | Rim Detachment Index | 102 | 103 | 104 | 105 |
| | Weight Index | 102 | 102 | 102 | 102 |

Next, as illustrated in Table 2, Examples 4 to 7 are configured by changing the angles of inclination of the reinforcement cord layer to the tire circumferential direction, while keeping the values of the other parameters the same as each other. Looking at the results of Table 2 indicates that the nearer to 90 degrees the angle of inclination of the reinforcement cord layer to the tire circumferential direction is, the better the results in the rim detachment index. This is thought to be because the bending rigidity of the shoulder portions increases the nearer to 90 degrees the angle of inclination of the reinforcement cord layer is, making a buckling phenomenon less likely to occur.

**Table 3**

| | | Example 8 | Example 9 |
|---|---|---|---|
| Reinforcement Cord Layer | Lay-Up Location (Tire Width Direction) | Shoulder Portions | Shoulder Portions |
| | Lay-Up Location (Tire Radial Direction) | Outside Belt Reinforcement Layer | Outside Belt Reinforcement Layer |
| | Length In Tire Width Direction (mm) | 35 | 40 |
| | Position S From Ground Contact End T (mm) | 5 | 0 |
| | Overlap Width P With Side Reinforcement Rubber (mm) | 10 | 15 |
| | Angle Of Inclination To Tire Circumferential Direction (Degrees) | 90 | 90 |
| | P/ Tread Width D (%) | 6.0 | 9.0 |
| | P/ Section Height SH (%) | 7.5 | 12.0 |
| Results | Rim Detachment Index | 103 | 105 |
| | Weight Index | 101 | 102 |

As illustrated in Table 3, Example 8 and Example 9 are Examples configured by changing the length of the reinforcement cord layer in the tire width direction, making the overlap width P between the side reinforcement rubber and the reinforcement cord layer different from each other. It was confirmed from looking at the results of Table 3 that Example 9, having a longer overlap width P than that of Example 8, has a better result in the rim detachment index.

## Claims

1. A run- flat radial tire (10) comprising:
a carcass (14) spanning between a pair of bead portions (12);
a side reinforcement layer (24) provided to tire side portions (22) that respectively couple between the bead portions (12) and a tread portion (20);
an inclined belt layer (16) that is provided at a tire radial direction outside of the carcass (14), and that comprises cord inclined to a tire circumferential direction;
a belt reinforcement layer (18) that is provided at the tire radial direction outside of the inclined belt layer (16), and that comprises cord extending along the tire circumferential direction; and
a reinforcement cord layer (32) that is provided at the tire radial direction outside of the belt reinforcement layer (18), **characterised in that** the reinforcing cord layer (32) comprises cord inclined to the tire circumferential direction at an angle of inclination of from 60 degrees to 90 degrees.

2. The run-flat radial tire (10) of claim 1, wherein the reinforcement cord layer (32) is provided at both end portions of the tread portion (20).

3. The run-flat radial tire (10) of any one of claim 1 or claim 2, wherein the reinforcement cord layer (32) is configured including cord of organic fiber.

4. The run-flat radial tire (10) of any one of claim 1 to claim 3, wherein a tire cross-section height is 115 mm, or greater.

5. A run-flat radial tire (50) comprising:
a carcass (14) spanning between a pair of bead portions (12);
a side reinforcement layer (24) provided to tire side portions (22) that respectively couple between the bead portions (12) and a tread portion (20);
an inclined belt layer (16) that is provided at a tire radial direction outside of the carcass (14), and that comprises cord inclined to a tire circumferential direction;
a belt reinforcement layer (18) that is provided at the tire radial direction outside of the inclined belt layer (16), and that comprises cord extending along the tire circumferential direction; and
a reinforcement cord layer (52) that is provided between the inclined belt layer (16) and the belt reinforcement layer (18), and that comprises cord inclined to the tire circumferential direction,
wherein the reinforcement cord layer (52) is only provided at both end portions of the tread portion (20).

6. The run-flat radial tire (50) of claim 5, wherein the reinforcement cord layer (52) is inclined to the tire circumferential direction at an angle of inclination of from 60 degrees to 90 degrees.

7. The run-flat radial tire (50) of claim 5 or claim 6, wherein the reinforcement cord layer (52) is configured including cord of organic fiber.

8. The run-flat radial tire (50) of any one of claim 5 to claim 7, wherein a tire cross-section height is 115 mm, or greater.

## Patentansprüche

1. Notlauf-Radialreifen (10), der Folgendes umfasst:
eine Karkasse (14), die sich zwischen einem Paar von Wulstabschnitten (12) spannt,
eine Seitenverstärkungslage (24), die an Reifenseitenabschnitten (22) bereitgestellt wird, die jeweils zwischen den Wulstabschnitten (12) und einem Laufflächenabschnitt (20) verbinden,
eine geneigte Gürtellage (16), die an einer in Reifenradialrichtung äußeren Seite der Karkasse (14) bereitgestellt wird und die Kord umfasst, der zu einer Reifenumfangsrichtung geneigt ist,
eine Gürtelverstärkungslage (18), die an der in Reifenradialrichtung äußeren Seite der geneigten Gürtellage (16) bereitgestellt wird und die Kord umfasst, der sich entlang der Reifenumfangsrichtung erstreckt, und
eine Verstärkungskordlage (32), die an der in Reifenradialrichtung äußeren Seite der Gürtelverstärkungslage (18) bereitgestellt wird, **dadurch gekennzeichnet, dass** die Verstärkungskordlage (32) Kord umfasst, der zu der Reifenumfangsrichtung in einem Neigungswinkel von 60 Grad bis 90 Grad geneigt ist.

2. Notlauf-Radialreifen (10) nach Anspruch 1, wobei die Verstärkungskordlage (32) an beiden Endabschnitten des Laufflächenabschnitts (20) bereitgestellt wird.

3. Notlauf-Radialreifen (10) nach Anspruch 1 oder Anspruch 2, wobei die Verstärkungskordlage (32) so konfiguriert ist, dass sie Kord aus organischer Faser einschließt.

4. Notlauf-Radialreifen (10) nach einem der Ansprüche 1 bis 3, wobei eine Reifenquerschnittshöhe 115 mm oder mehr beträgt.

5. Notlauf-Radialreifen (50), der Folgendes umfasst:
eine Karkasse (14), die sich zwischen einem Paar von Wulstabschnitten (12) spannt,
eine Seitenverstärkungslage (24), die an Reifenseitenabschnitten (22) bereitgestellt wird, die jeweils zwischen den Wulstabschnitten (12) und einem Laufflächenabschnitt (20) verbinden,
eine geneigte Gürtellage (16), die an einer in Reifenradialrichtung äußeren Seite der Karkasse (14) bereitgestellt wird und die Kord umfasst, der zu einer Reifenumfangsrichtung geneigt ist,
eine Gürtelverstärkungslage (18), die an der in Reifenradialrichtung äußeren Seite der geneigten Gürtellage (16) bereitgestellt wird und die Kord umfasst, der sich entlang der Reifenumfangsrichtung erstreckt, und
eine Verstärkungskordlage (52), die zwischen der geneigten Gürtellage (16) und der Gürtelverstärkungslage (18) bereitgestellt wird und die Kord umfasst, der zu der Reifenumfangsrichtung geneigt ist,
wobei die Verstärkungskordlage (52) nur an beiden Endabschnitten des Laufflächenabschnitts (20) bereitgestellt wird.

6. Notlauf-Radialreifen (50) nach Anspruch 5, wobei die Verstärkungskordlage (52) zu der Reifenumfangsrichtung in einem Neigungswinkel von 60 Grad bis 90 Grad geneigt ist.

7. Notlauf-Radialreifen (50) nach Anspruch 5 oder Anspruch 6, wobei die Verstärkungskordlage (52) so konfiguriert ist, dass sie Kord aus organischer Faser einschließt.

8. Notlauf-Radialreifen (50) nach einem der Ansprüche 5 bis 7, wobei eine Reifenquerschnittshöhe 115 mm oder mehr beträgt.

## Revendications

1. Bandage pneumatique à affaissement limité (10), comprenant :
une carcasse (14) s'étendant entre une paire de parties de talon (12) ;
une couche de renforcement latérale (24) agencée sur des parties latérales du bandage pneumatique (22,) assurant respectivement l'accouplement entre les parties de talon (12) et une partie de bande de roulement (20) ;
une couche de ceinture inclinée (16) agencée au niveau d'un côté extérieur, dans une direction radiale du bandage pneumatique, de la carcasse (14), et comprenant des câblés inclinés vers une direction circonférentielle du bandage pneumatique ;
une couche de renforcement de ceinture (18) agencée au niveau du côté extérieur, dans la direction radiale du bandage pneumatique, de la couche de ceinture inclinée (16) et comprenant des câblés s'étendant le long de la direction circonférentielle du bandage pneumatique ; et
une couche de câblés de renforcement (32) agencée au niveau du côté extérieur, dans la direction radiale du bandage pneumatique, de la couche de renforcement de ceinture (18), **caractérisé en ce que** la couche de câblés de renforcement (32) comprend des câblés inclinés vers la direction circonférentielle du bandage pneumatique, à un angle d'inclinaison compris entre 60 degrés et 90 degrés.

2. Bandage pneumatique à affaissement limité (10) selon la revendication 1, dans lequel la couche de câblés de renforcement (32) est agencée au niveau des deux parties d'extrémité de la partie de bande de roulement (20).

3. Bandage pneumatique à affaissement limité (10) selon l'une quelconque des revendications 1 ou 2, dans lequel la couche de câblés de renforcement (32) est configurée de sorte à inclure des câblés de fibres organiques.

4. Bandage pneumatique à affaissement limité (10) selon l'une quelconque des revendications 1 à 3, dans lequel une hauteur de section transversale du bandage pneumatique correspond à 115 mm ou plus.

5. Bandage pneumatique à affaissement limité (50), comprenant :
une carcasse (14) s'étendant entre une paire de parties de talon (12) ;
une couche de renforcement latérale (24) agencée sur des parties latérales du bandage pneumatique (22), assurant respectivement l'accouplement entre les parties de talon (12) et une partie de bande de roulement (20) ;
une couche de ceinture inclinée (16) agencée au niveau d'un côté extérieur, dans une direction radiale du bandage pneumatique, de la carcasse (14), et comprenant des câblés inclinés vers une direction circonférentielle du bandage pneumatique ;
une couche de renforcement de ceinture (18) agencée au niveau d'un côté extérieur, dans la direction radiale du bandage pneumatique, de la couche de ceinture inclinée (16), et comprenant des câblés s'étendant le long de la direction circonférentielle du bandage pneumatique ; et
une couche de câblés de renforcement (52) agencée entre la couche de ceinture inclinée (16) et la couche de renforcement de ceinture (18), et comprenant des câblés inclinés ver la direction circonférentielle du bandage pneumatique ;
dans lequel la couche de câblés de renforcement (52) est uniquement agencée au niveau des deux parties d'extrémité de la partie de bande de roulement (20).

6. Bandage pneumatique (50) selon la revendication 5, dans lequel la couche de câblés de renforcement (52) est inclinée vers la direction circonférentielle du bandage pneumatique, à un angle d'inclinaison compris entre 60 degrés et 90 degrés.

7. Bandage pneumatique à affaissement limité (50) selon les revendications 5 ou 6, dans lequel la couche de câblés de renforcement (52) est configurée de sorte à inclure des câblés de fibres organiques.

8. Bandage pneumatique à affaissement limité (50) selon l'une quelconque des revendications 5 à 7, dans lequel une hauteur de section transversale du bandage pneumatique correspond à 115mm ou plus.
